(19) Europäisches Patentamt
European Patent Office
Office européen des brevets

(11) Publication number: **0 221 644 B1**

(12) # EUROPEAN PATENT SPECIFICATION

(45) Date of publication of patent specification: **11.12.91**

(51) Int. Cl.5: **C08L 83/04**, C09K 3/10, C08K 5/54

(21) Application number: **86306680.9**

(22) Date of filing: **29.08.86**

(54) **Adhesion of silicone sealant.**

(30) Priority: **15.10.85 US 787587**

(43) Date of publication of application:
**13.05.87 Bulletin 87/20**

(45) Publication of the grant of the patent:
**11.12.91 Bulletin 91/50**

(84) Designated Contracting States:
**DE FR GB**

(56) References cited:
**EP-A- 0 175 134**
**EP-A- 0 178 751**
**GB-A- 2 067 212**
**US-A- 4 252 933**

(73) Proprietor: **DOW CORNING CORPORATION**
**3901 S. Saginaw Road**
**Midland Michigan 48640(US)**

(72) Inventor: **Dietlein, John Earl**
**528 Webb Drive**
**Bay City Michigan(US)**
Inventor: **Klosowski, Jerome Melvin**
**2029 Briar Drive**
**Bay City Michigan(US)**

(74) Representative: **Laredo, Jack Joseph et al**
**Elkington and Fife Prospect House 8 Pembroke Road**
**Sevenoaks, Kent TN13 1XR(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

This invention relates to silicone sealants which cure upon exposure to moisture without releasing corrosive by-products.

One of the types of one component room temperature curing silicone rubbers is that disclosed by Weyenberg in United States Patent No. 3,334,067, issued August 1, 1967. This composition of hydroxyl endblocked polydiorganosiloxane, silane of the formula $R'Si(OR'')_3$ and chelated titanium compound is stable in the absence of moisture, but cures upon exposure to moisture. Compositions such as these have been developed into commercial sealants which are promoted for filling openings in buildings to seal them from the weather. A successful sealant for such applications must adhere to the substrate on which it is placed in order to form a reliable seal. Many different types of sealants have been made available with varying degrees of adhesion to various types of substrates such as are found in buildings. Improving the adhesion of such sealants to a wider variety of substrates has been the object of much experimentation.

UK Patent Application 2,137,217A published October 3, 1984, discloses a self-bonding alkoxy-functional one-component RTV composition containing alkoxy terminated organopolysiloxane, a silane scavenger, a substituted guanidine curing accelerator, a condensation catalyst which includes titanium compounds, and an adhesion promoter having the formula $(R^{10}O)_{3-t}(R^{11}_t)Si\text{-}Z$ where $R^{10}$ and $R^{11}$ are monovalent hydrocarbon radicals having from 1 to 8 carbon atoms, $t$ varies from 0 to 3 and Z is a saturated, unsaturated or aromatic hydrocarbon residue which may be further functionalized by a member selected from the class consisting of amino, ether, epoxy, isocyanato, cyano, acryloxy, and acyloxy, and multiples and combinations thereof.

EP-A-0178 751 relates to two-part silicone-based sealant compositions in which the sealant composition is obtained by mixing (A) a silanol-terminated polydiorganosiloxane, (B) a crosslinking agent for (A) which is a silicon compound having in the molecule at least 3 silicon-bonded groups selected from alkoxy and alkoxyalkoxy groups having less than 6 carbon atoms, (C) a metal or organometal salt of a carboxylic acid, (D) a silane of the general formula.

$$\begin{array}{c} \quad X_a \\ \quad | \\ RHNR'Si(OY)_{3-a} \end{array}$$

wherein R represents a hydrogen atom, an alkyl group having from 1 to 4 inclusive carbon atoms or an aliphatic hydrocarbon group attached to the nitrogen atom through a carbon to nitrogen bond and containing at least one amino group, R' represents an alkylene group having from 3 to 6 inclusive carbon atoms, X represents a monovalent hydrocarbon group having from 1 to 6 inclusive carbon atoms, Y represents an alkyl or alkoxyalkyl group having less than 6 carbon atoms and $\underline{a}$ has a value of 0 or 1, and (E) a silane of the general formula

$$\begin{array}{c} L_b \\ | \\ ZSi(OM)_{3-b} \end{array}$$

wherein Z represents an organic group composed of carbon, hydrogen and oxygen having therein at least one group of the formula

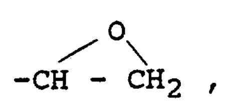

L represents an alkyl group having from 1 to 4 inclusive carbon atoms, or a phenyl group, M represents an alkyl or an alkoxyalkyl group having less than 6 carbon atoms and $\underline{b}$ has a value of 0 or 1. The metal of the metal or organometal salt of a carboxylic acid constituting the curing cataylst (C) may be for example zinc, cobalt or lead but is preferably tin. Examples of such salts are zinc naphthenate, lead octoate, stannous octoate, dibutyltin dilaurate, dibutyltin dioctoate and dibutyltin diversatate. Although the compositions may be prepared by simply mixing the components (A) to (E) in the desired proportions, these compositions are normally supplied as a two-package product in which the catalyst (C) is packaged separately from the

polydiorganosiloxane (A). The crosslinker (B) may be mixed with (A) or with (C) or with both. In use, the contents of the packages are mixed together and curing commences. The compositions may contain additional ingredients such as any of a variety of fillers, for example, silica aerogel, diatomaceous earth, crushed quartz, zinc oxide, titanium dioxide, calcium carbonate, iron oxide and carbon black. Other ingredients which may also be present are pigments, heat stability additives and polydiorganosiloxanes, e.g. polydimethylsiloxanes having triorganosilyl units e.g. trimethylsilyl units at one or both ends of the molecule.

GB-A-2067 212 describes a silicone resin-containing composition which can be stored under dry conditions for lengthy periods of time but is curable at room temperature in the presence of moisture to produce a water-repelling, mold-releasing, easily peelable and soil-resistant film. The silicone resin composition comprises:

(a) 100 parts by weight of an organopolysiloxane resin having the average unit formula:

$$R'_nSiO_{\frac{4-n-m}{2}}(OH)_m$$

wherein R' is a substituted monovalent hydrocarbon radical, n has a value of 0.80 to 1.80 and m has a value such that the amount of hydroxyl radicals bonded to silicon atoms in the organopolysiloxane resin is equal to or greater than 0.01 weight percent based on the weight of the organopolysiloxane resin;

(b) 0.5-50 parts by weight of an alpha, omega-dihydroxydiorganopolysiloxane having the general formula:

$HO(R''_2SiO)_aH$

wherein R" is a substituted or unsubstituted monovalent hydrocarbon radical, and q is an integer equal to or greater than 2; and

(c) a silicone compound selected from:

(i) a silane having the general formula $R'''_aSiX_{4-a}$, wherein a is 0,1 or 2 and X is a group which is hydrolysable in the presence of water and ambient temperature, and

(ii) the partial hydrolysis and condensation product of the silane in (i),

the amount of (c) in the total composition being such that, in admixture with the components (a) and (b), the entire composition may be stored under anhydrous conditions but is curable at room temperature in the presence of water. R''' in the general formula $R'''_aSiX_{4-a}$ can be any of a number of monovalent hydrocarbon groups, but is preferably alkyl, alkenyl or the haloalkyl group, the methyl or the vinyl group being the most preferred. X is a group which is hydrolysable in the presence of moisture. Examples of this group are diorganoketoxime, acyloxy, monoorganoamino, diorganoamino, N-organoacylamino, N,N-diorganoaminoxy, alkoxy and alpha,beta-substituted vinyloxy. Diorganoketoxime, acyloxy, alpha,beta-substituted vinyloxy, monoorganoamino and diorganoamino are preferred from the standpoint of the ease of production of a composition which is storable under dry conditions for long periods of time. The value of a is 0, 1 or 2, and is preferably 1.

Examples of component (c) include methylvinyldi(dimethylketoxime)silane, methyltriacetoxysilane, vinyltriacetoxysilane, methyltri(N-butylamino)silane, vinyltri(N-cyclohexylamino)silane, methyltriethoxysilane and vinyltriethoxysilane.

The quantity of this component in the composition depends on the quantity of silicon-bonded hydroxyl groups in component (a), the quantity of silicon-bonded hydroxyl groups in component (b) and the quantity of hydrolysable groups in component (c). The amount of component (c) has to be balanced against the amount of hydroxyl in the composition to give a composition which is storable under dry conditions for long periods of time, and is thereafter curable at room temperature in the presence of moisture.

A silane-coupling agent may be added to these compositions to increase adhesive capacity relative to various base materials.

Examples of such silane-coupling agents are $H_2NCH_2CH_2Si(OC_2H_5)_3$, $NH_2CH_2CH_2NH(CH_2)_3Si(OCH_3)_3$,

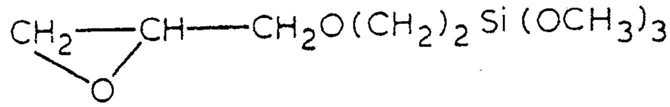 $CH_2=CHSi(OCH_3)_3$,

$CH_2=CHSi(OC_2H_5)_3$, 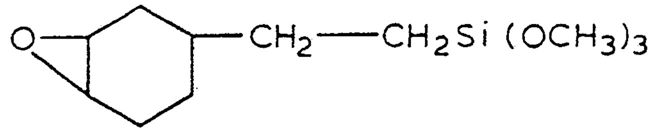

$HS(CH_2)_3Si-(OCH_3)_3$, 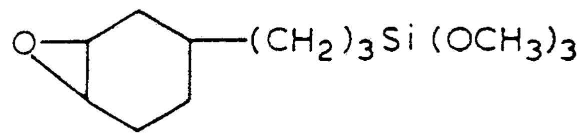 and

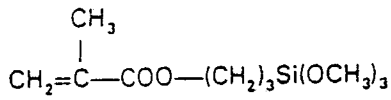

and mixtures of these compounds.

Catalysts which may be added to accelerate curing include tin carboxylates such as dibutyltin diacetate, iron, manganese and cobalt salts of carboxylic acids and complexes such as tetraalkyltitanate and dialkyltitanate and organosiloxytitanate.

The composition cures at room temperature to a hard film coat which has the characteristics of water repellency, mould releasability and ease of peeling and also heat resistance, weather resistance and solvent resistance, so that there is a wide range of applications as a coating which repels the adhesion of water, oil, paint, adhesives and pasting agents and also as a coating agent for peeling or mould release, or for the protection of surfaces, particularly in large scale structures, e.g. large metal structures.

Even though methods have been developed for producing improved adhesion of sealants to substrates, additional improvements are desired for increasing the number of substrates that can be successfully adhered by a single sealant to improve the versatility of the sealant.

An improved sealant of the type produced by mixing hydroxyl endblocked polydiorganosiloxane, alkyltrialkoxysilane, filler, titanium catalyst, and amine containing trialkoxysilane has been developed through the addition of an epoxy containing silane of the formula

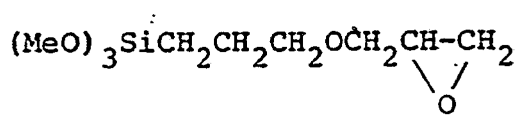 .

It is an object of this invention to produce an improved sealant having adhesion to a greater variety of substrates.

This invention is a composition consisting essentially of (A) 100 parts by weight of a hydroxyl endblocked polydiorganosiloxane having a viscosity of between 1.0 and 100 Pa•s at 25°C, the organic groups being selected from the group consisting of methyl, ethyl, propyl, phenyl, and trifluoropropyl, (B) from 0.35 to 9.0 parts by weight of an alkyltrialkoxysilane of the formula $RSi(OR^1)_3$ where R is a monovalent hydrocarbon radical of from 1 to 4 carbon atoms and $R^1$ is an alkyl or alkoxyalkyl radical, (C) from 0.2 to 3.0 parts by weight of titanium catalyst, (D) from 0 to 250 parts by weight of filler, (E) from 0.1 to 2.0 parts by weight of the sum of A, B, C, and D of a silane of the formula $(MeO)_3SiCH_2CH_2CH_2NHCH_2CH_2NH_2$, and (F) from 0.15 to 2 parts by weight of the sum of A, B, C, and D of a silane of the formula

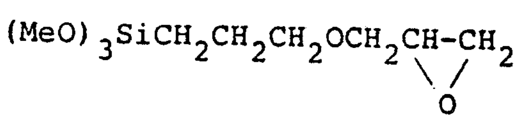 .

Many commercial silicone sealants have been developed based upon the use of a hydroxyl endblocked polydiorganosiloxane, alkoxy functional silane crosslinker, titanium containing catalyst, and filler. The nature

of the specific ingredients used is changed depending upon the requirements of the end use. Some applications require an elastomer having a high tensile strength, so a reinforcing type filler is used as an ingredient. Some applications do not require high tensile strength, but require a high elongation, so non-reinforcing fillers and chemical chain extenders are used as ingredients. Some applications require that the sealant adhere to the substrate against which it is cured to a great degree. It has been discovered that adhesion of cured sealant to substrates under varying exposure conditions varies a great deal depending upon the composition of the sealant, the nature of the substrate and the conditions under which the adhesion must be maintained. The instant invention is the result of work done to improve the number and type of substrates that could be adhered to successfully by a single composition, particularly when the adhesion must be retained after immersion in water.

The composition of the instant invention contains hydroxyl endblocked polydiorganosiloxane having a viscosity of between 1.0 and 100 Pa•s at 25°C. The organic groups of the polydiorganosiloxane are selected from the group consisting of methyl, ethyl, propyl, phenyl, and trifluoropropyl. The preferred organic group is methyl since this is the most economical at the present time. If solvent resistance is a requirement of the cured elastomer, up to 50 mol percent of the organic groups can be trifluoropropyl groups. The viscosity of the polymer is greater than 1.0 Pa•s at 25°C because polymers having a lower viscosity do not give satisfactory physical properties. The viscosity of the polymer is less than 100 Pa•s at 25°C because polymers having higher viscosities, for example, 1,000 Pa•s at 25°C result in compositions which are too viscous to be readily extruded from the common storage tubes used for sealants. The polymer can be a homopolymer or a copolymer or mixtures. The viscosity of the polymer is the average viscosity of the polymer or polymers used as (A). The polymer can have a wide variation of molecular weights of individual molecules present as long as their average viscosity is within the claimed range. The preferred viscosity is from 40 to 60 Pa•s at 25°C.

The alkyltrialkoxysilane (B) is the crosslinking agent of the average formula $RSi(OR')_3$ where R is a monovalent hydrocarbon radical of from 1 to 4 carbon atoms and R' is an alkyl or alkoxyalkyl radical. Suitable silanes or mixtures of silanes are well-known in the art. R is preferably methyl, vinyl, or ethyl, with methyl being the most preferred radical. R' is preferably methyl, ethyl, or methoxyethyl, with methyl being the most preferred radical. The crosslinker (B) is used at a level of from 0.35 to 9.0 parts by weight, preferably B is 4 to 8 parts by weight of methyltriethoxysilane. In order to cure properly, the composition requires at least 2 mols of crosslinker per mol of hydroxyl in the polymer (A). Commercially, it has been found that it is preferred to use up to 5 times excess of crosslinker to provide for the reaction of some of the crosslinker with incidental hydroxyl groups present in the composition, for example on the filler, and to react with moisture which may be present in the composition when it is produced or which may gain access to the composition during storage.

The titanium catalyst (C) is selected from the well-known titanium catalysts used in silicone moisture-curing sealants such as tetrabutyltitanate, tetraisopropyltitanate, and the chelated titanium compounds such as those disclosed in U.S. Patent No. 3,334,067, issued August 1, 1967, to Weyenberg, and U.S. Patent No. 3,499,859, issued March 10, 1970 to Matherly, both of which show suitable titanium catalysts and their method of manufacture. A preferred catalyst is 2,5-diisopropoxy-bis-ethylacetoacetate titanium.

The composition of the present invention can be modified by the incorporation of various reinforcing and extending fillers. Suitable fillers are those well-known fillers used in silicone polymers such as fume silica, precipitated silica, diatomaceous earth, calcium carbonate, zinc oxide, titanium oxide, iron dioxide, and ground quartz. The fillers may be untreated or treated with surface treatments either before addition to the composition or treated in situ during the manufacture of the composition. Among the most useful fillers are calcium carbonate alone, or mixed with fume silica. The preferred amount of filler is from 10 to 200 parts by weight. From 1 to 20 parts of reinforcing filler is preferred and from 1 to 200 parts of extending filler. A combination such as from 5 to 15 parts of reinforcing filler and from 150 to 200 parts of extending filler is most preferred.

Ingredients (E) and (F) are added to the composition to aid in adhering of the cured composition to a wide variety of substrates. It was found that the addition of an additive to improve adhesion, such as (E) $(MeO)_3SiCH_2CH_2CH_2NHCH_2CH_2NH_2$ was not satisfactory in many cases. For example, when a composition containing (E) as adhesion additive was cured in contact with ACT reflective glass or Duranar coated aluminum, there was zero percent cohesive failure when the sealant was peeled off the substrate after 14 days at room temperature. When immersed in water for 7 days and then tested for adhesion, the sample showed zero percent cohesive failure when tested against an anodized aluminum substrate.

The use of an additional epoxy functional silicone fluid to improve adhesion was evaluated. It was unexpectedly found that of the epoxy functional fluids evaluated only (F)

$$\mathrm{(MeO)_3SiCH_2CH_2CH_2OCH_2\underset{\diagdown\;O\;\diagup}{CH-CH_2}}$$

was successful in providing 100 percent cohesive bonding to ACT reflective glass. The epoxy-functional fluid, additive B, in Example 1, gave 100 percent cohesive failure to the Duranar fluorocarbon finished aluminum at the 1 percent level, but not at the 0.5 percent level. Thus (F) was unique in its ability to improve adhesion to both ACT reflective glass and Duranar fluorocarbon treated aluminum.

The amount of ingredient (E) is from 0.1 to 2.0 percent by weight of the remaining composition, not containing (E) and (F). If less than this amount is used, the improved adhesion is minimal. More than this amount can be used, but it is unnecessary because this amount already gives 100 percent cohesive adhesion. The preferred amount of (E) is from 0.1 to 0.5 parts by weight.

The amount of ingredient (F) is from 0.15 to 2 percent by weight of the remaining composition, not containing (E) and (F). If less than these amounts is used, the improved adhesion is minimal. More than this amount can be used, but it is unnecessary because this amount already gives 100 percent cohesive adhesion. The preferred amount of (F) is from 0.15 to 0.5 part by weight.

Additional ingredients such as flame retardants, stabilizing agents, plasticizers, and pigments may be added as long as they are evaluated to ensure that they do not adversely effect the adhesion of the composition.

The composition of the present invention is produced by mixing, in the absence of moisture, ingredients (A), (B), (C), (D), (E) and (F), then storing the mixture in the absence of moisture. A preferred method mixes the polymer (A), filler (D), and any filler treating agent or plasticizer, then heats the mixture with stirring to a temperature of greater than 100°C under vacuum or under a nitrogen sweep to thoroughly disperse the filler and to remove any excess moisture. Then the mixture is cooled without exposure to moisture and the crosslinker (B) and catalyst (C) are added without exposing to moisture. Then (E) and (F) are added, again without moisture exposure as silanes will react when exposed to moisture. The finished mixture is then stored in moisture-proof containers, for example, the common sealant cartridges used to store and apply sealants.

The improved composition of this invention is particularly useful in the manufacture of modern, glass-walled buildings when it is necessary to obtain reliable sealing of the joints between reflective glass panels on the metal-supporting structures which are generally treated to give a weatherproof surface.

The following examples are included for illustrative purposes only and should not be construed as limiting the invention which is properly set forth in the appended claims.

All parts are parts by weight.

## Example 1

A series of compositions useful as sealants were prepared to determine their adhesion to a variety of substrates.

A base composition was prepared by admixing 30.2 parts of a hydroxyl endblocked polydimethylsiloxane fluid having a viscosity of about 48 Pa•s at 25°C and a hydroxyl content of about 0.06 percent by weight, 53.4 part of calcium carbonate having a surface treated with calcium stearate, 9 parts of a trimethylsiloxy endblocked polydimethylsiloxane fluid having a viscosity of about 0.1 Pa•s at 25°C, 3.8 parts of fumed silica having a surface area of about 150 $m^2/g$, and 1 part of a hydroxyl endblocked polymethylphenylsiloxane having a hydroxyl content of about 4.5 weight percent and a viscosity of about 0.5 Pa•s at 25°C. This mixture was then mixed, in the absence of moisture, with 2.6 parts of a second mixture of 73.5 parts of methyltrimethoxysilane, 24.5 parts of 2,5-diisopropoxy-bis-ethylacetoacetate titanium, and 2 parts of 3-(2-aminoethylamino)propyltrimethoxy silane. The mixture was then placed under vacuum to remove entrapped air and any volatile materials.

Compositions were then prepared by mixing, in the absence of moisture, 100 parts of the above base with 0.5 part and 1.0 part of additives. Additive A was an epoxy functional silicone fluid having the formula

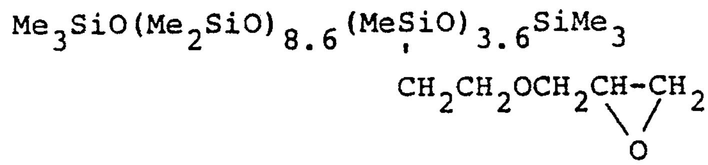

Additive B was an epoxy functional silicone fluid of the formula

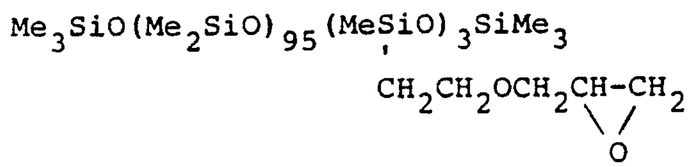

Additive C was an epoxy functional silicone fluid of the formula

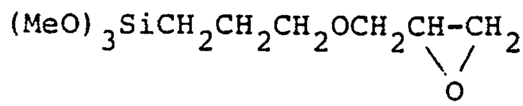

After mixing, each composition was placed in a sealant cartridge for storage. A seven-day period was allowed for any reaction that might take place to reach equilibrium, then test samples were prepared.

Each sealant sample was tooled onto the substrate shown in Table I into a bead 25 mm wide and 6 mm thick. The beads were allowed to cure undisturbed for 14 days at 23°C and 50% RH. Adhesion was then evaluated by a tab adhesion test procedure. One inch of the bead was loosed from the substrate by making a knife cut along the substrate at the sealant-substrate interface. This tab was then pulled firmly away from the substrate at a 90° angle. If adhesion was acceptable, the sealant would tear cohesively in itself rather than releasing adhesively from the substrate. The area where the bead was pulled free of the substrate was observed and the percent that had cohesive failure was noted as in Table I.

The samples were then placed into room temperature tap water for 1 day and the adhesion was re-evaluated. The sample was returned to the tap water and adhesion was again evaluated after 7 days total in water.

Each sealant sample was also tested for physical properties by tooling a sheet of sealant onto polyethylene coated paper, allowing the sheet to cure for 21 days at standard laboratory conditions, cutting out test samples and testing with a durometer in accordance with ASTM D2240, tensile strength and elongation at break in accordance with ASTM D412, and tear strength, die B, in accordance with ASTM D624. The skin-over-time (SOT) and tack-free-time (TFT) of each sealant when exposed to moisture under the standard laboratory conditions were also measured. These results are shown in Table II.

The substrates tested against are representative construction materials such as are found in modern glass and aluminum office buildings. ACT glass is a commercial reflective coated glass from Advanced Coatings Technology consisting of a vacuum spreader applied nickel chromium coating. Duranar® is a fluorocarbon finished aluminum from PPG. Both mill finished and anodized aluminum were tested as well as concrete.

The composition containing additive C was the only composition that adhered to the ACT glass substrate. All samples adhered to the anodized aluminum and mill finished aluminum. Additive C gave adhesion to the Duranar substrate at the 0.5 level, while the other additives required the 1 percent level. None of the additives provided successful adhesion to concrete after the 7 day immersion in water.

TABLE I

Tab Adhesion Results

| Additive | Level | | Substrate: ACT Glass | Duranar | Anodized Al | Mill Al | Concrete |
|---|---|---|---|---|---|---|---|
| A | 0.5% | 14 day R.T. | 0% Coh | 100% Coh | 100% Coh | 100% Coh | 80% Coh |
| | | 1 day $H_2O$ | 0% Coh | 100% Coh | 100% Coh | 100% Coh | 100% Coh |
| | | 7 day $H_2O$ | 0% Coh | 50% Coh | 100% Coh | 100% Coh | 0% Coh |
| | 1.0% | 14 day R.T. | 0% Coh | 100% Coh | 100% Coh | 100% Coh | 100% Coh |
| | | 1 day $H_2O$ | 0% Coh | 100% Coh | 100% Coh | 100% Coh | 100% Coh |
| | | 7 day $H_2O$ | 0% Coh | 100% Coh | 100% Coh | 100% Coh | 0% Coh |
| B | 0.5% | 14 day R.T. | 0% Coh | 100% Coh | 100% Coh | 100% Coh | 100% Coh |
| | | 1 day $H_2O$ | 0% Coh | 30% Coh | 100% Coh | 100% Coh | 20% Coh |
| | | 7 day $H_2O$ | 0% Coh | 100% Coh | 100% Coh | 100% Coh | 0% Coh |
| | 1.0% | 14 day R.T. | 0% Coh | 100% Coh | 100% Coh | 100% Coh | 100% Coh |
| | | 1 day $H_2O$ | 0% Coh | 100% Coh | 100% Coh | 100% Coh | 100% Coh |
| | | 7 day $H_2O$ | 0% Coh | 100% Coh | 100% Coh | 100% Coh | 0% Coh |
| C | 0.5% | 14 day R.T. | 100% Coh | 100% Coh | 100% Coh | 100% Coh | 100% Coh |
| | | 1 day $H_2O$ | 100% Coh | 100% Coh | 100% Coh | 100% Coh | 100% Coh |
| | | 7 day $H_2O$ | 100% Coh | 100% Coh | 100% Coh | 100% Coh | 0% Coh |
| | 1.0% | 14 day R.T. | 100% Coh | 100% Coh | 100% Coh | 100% Coh | 90% Coh |
| | | 1 day $H_2O$ | 100% Coh | 100% Coh | 100% Coh | 100% Coh | 50% Coh |
| | | 7 day $H_2O$ | 100% Coh | 100% Coh | 100% Coh | 100% Coh | 0% Coh |
| Control | - | 14 day R.T. | 0% Coh | 0% Coh | 100% Coh | 100% Coh | 90% Coh |
| | | 1 day $H_2O$ | 30% Coh | 50% Coh | 100% Coh | 100% Coh | 100% Coh |
| | | 7 day $H_2O$ | 90% Coh | 100% Coh | 0% Coh | 100% Coh | 0% Coh |

TABLE II

Physical Properties

| Additive | Level | Duro. | Tensile MPa | Elongation | Tear | SOT | TFT |
|---|---|---|---|---|---|---|---|
| A | 0.5% | 30 | 1.38 | 550 | 0.29 | 25 min | 67 min |
| | 1.0% | 31 | 1.33 | 567 | 0.28 | 32 min | 91 min |
| B | 0.5% | 34 | 1.35 | 440 | 0.29 | 17 min | 48 min |
| | 1.0% | 33 | 1.36 | 450 | 0.30 | 23 min | 66 min |
| C | 0.5% | 34 | 1.21 | 350 | 0.30 | 31 min | 48 min |
| | 1.0% | 34 | 1.33 | 420 | 0.30 | 33 min | 58 min |
| Control | - | 37 | 1.39 | 420 | 0.29 | 22 min | 44 min |

## Claims

**1.** A composition comprising a mixture of

(A) 100 parts by weight of a hydroxyl endblocked polydiorganosiloxane having a viscosity of

between 1.0 and 100 Pa′s at 25° C, the organic groups being selected from the group consisting of methyl, ethyl, propyl, phenyl, and trifluoropropyl,
B) from 0.35 to 9.0 parts by weight of an alkyltrialkoxysilane of the formula $RSi(OR')_3$ where R is a monovalent hydrocarbon radical of from 1 to 4 carbon atoms and R′ is an alkyl or alkoxyalkyl radical,
(C) from 0.2 to 3.0 parts by weight of titanium catalyst,
(D) from 0 to 250 parts by weight of filler,
(E) from 0.1 to 2.0 parts by weight of the sum of A, B, C, and D of a silane of the formula

$(MeO)_3SiCH_2CH_2CH_2NHCH_2CH_2NH_2$

and
(F) from 0.15 to 2 parts by weight of the sum of A, B, C, and D of a silane of the formula

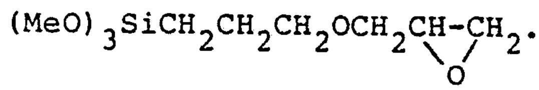

2. The composition of claim 1 in which the organic groups of (A) are methyl.

3. The composition of claim 1 in which R′ is methyl or ethyl.

4. The composition of claim 2 in which (B) is methyltrimethoxysilane.

5. The composition of claim 4 in which the viscosity of (A) is between 40 and 60 Pa•s at 25° C.

6. The composition of claim 2 in which (B) is 4 to 8 parts by weight of methyltrimethoxysilane.

7. The composition of claim 2 in which (D) is from 10 to 200 parts by weight.

8. The composition of claim 2 in which (E) is from 0.1 to 0.5 part by weight.

9. The composition of claim 2 in which (F) is from 0.15 to 0.5 part by weight.

10. The composition of claim 1 in which the viscosity of (A) is from 40 to 60 Pa•s at 25° C, (B) is from 4 to 8 parts by weight, (D) is from 10 to 200 parts by weight, and (F) is from 0.15 to 0.5 part by weight.

11. A method of producing an one-part silicone sealant curable on exposure to moisture consisting of mixing, in the absence of moisture, the components as defined in claim 1, then storing in the absence of moisture, to yield a sealant material that cures upon exposure to moisture.

12. The method of claim 11 in which (A) is between 40 and 60 Pa•s at 25° C, (B) is from 4 to 8 parts by weight, (D) is from 10 to 200 parts by weight, and (F) is from 0.15 to 0.5 part by weight.

## Revendications

1. Une composition comprenant un mélange de
(A) 100 parties en poids d'un polydiorganosiloxane terminé par des groupes hydroxyle, ayant une viscosité de 1,0 à 100 Pa.s à 25° C, les groupes organiques étant choisis dans la classe formée par les radicaux méthyle, éthyle, propyle, phényle et trifluoropropyle,
(B) 0,35 à 9,0 parties en poids d'un alkyltrialcoxysilane de la formule $RSi(OR')_3$ où R est un radical hydrocarboné monovalent de 1 à 4 atomes de carbone et R' est un radical alkyle ou alcoxyalkyle,
(C) 0,2 à 3,0 parties en poids d'un catalyseur au titane,
(D) 0 à 250 parties en poids d'une charge,
(E) 0,1 à 2,0 parties en poids de la somme de A, B, C et D d'un silane de la formule

$(MeO)_3SiCH_2CH_2CH_2NHCH_2CH_2NH_2$

et

(F) 0,15 à 2 parties en poids de la somme de A, B, C et D d'un silane de la formule

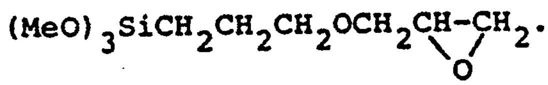

2. La composition de la revendication 1, dans laquelle les groupes organiques de (A) sont des radicaux méthyle.

3. La composition de la revendication 1, dans laquelle R' est un radical méthyle ou éthyle.

4. La composition de la revendication 2, dans laquelle (B) est le méthyltriméthoxysilane.

5. La composition de la revendication 4, dans laquelle la viscosité de (A) est comprise entre 40 et 60 Pa.s à 25 °C.

6. La composition de la revendication 2, dans laquelle (B) consiste en 4 à 8 parties en poids de méthyltriméthoxysilane.

7. La composition de la revendication 2, dans laquelle la quantité de (D) est de 10 à 200 parties en poids.

8. La composition de la revendication 2, dans laquelle la quantité de (E) est de 0,1 à 0,5 partie en poids.

9. La composition de la revendication 2 dans laquelle la quantité de (F) est de 0,15 à 0,5 partie en poids.

10. La composition de la revendication 1, dans laquelle la viscosité de (A) est de 40 à 60 Pa.s à 25 °C, la quantité de (B) est de 4 à 8 parties en poids, la quantité de (D) est de 10 à 200 parties en poids, et la quantité de (F) est de 0,15 à 0,5 partie en poids.

11. Un procédé de production d'un agent d'étanchéité, à base de silicone, à composant unique, durcissable par exposition à l'humidité, consistant à mélanger, en l'absence d'humidité, une composition selon la revendication 1, puis à la stocker en l'absence d'humidité pour obtenir un agent d'étanchéité qui durcit par exposition à l'humidité.

12. Le procédé de la revendication 11, dans lequel la viscosité de (A) est de 40 à 60 Pa.s à 25°, la quantité de (B) est de 4 à 8 parties en poids, la quantité de (D) est de 10 à 200 parties en poids et la quantité de (F) est de 0,15 à 0,5 partie en poids.

**Patentansprüche**

1. Zusammensetzung, enthaltend eine Mischung von
   (A) 100 Gewichtsteilen eines blockierende, endständige Hydroxylgruppen aufweisenden Polydiorganosiloxans mit einer Viskosität bei 25 °C zwischen 1,0 und 100 Pa.s, dessen organische Reste aus der aus Methyl, Ethyl, Propyl, Phenyl und Trifluorpropyl bestehenden Gruppe ausgewählt sind,
   (B) 0,35-9,0 Gewichtsteilen eines Alkyltrialkoxysilans der Formel $RSi(OR')_3$, in der R ein einwertiger Kohlenwasserstoffrest mit 1-4 Kohlenstoffatomen und R' ein Alkyl- oder Alkoxyalkylrest ist,
   (C) von 0,2-3,0 Gewichtsteilen Titankatalysator,
   (D) von 0-250 Gewichtsteilen Füllstoff,
   (E) von 0,1-2,0 Gewichtsteilen, bezogen auf die Summe von A, B, C und D eines Silans der Formel

   $(MeO)_3SiCH_2CH_2CH_2NHCH_2CH_2NH_2$,

   (F) und von 0,15-2 Gewichtsteilen, bezogen auf die Summe von A, B, C und D eines Silans der

Formel

$$(MeO)_3SiCH_2CH_2CH_2OCH_2\underset{O}{CH-CH_2}.$$

2. Zusammensetzung nach Anspruch 1, **dadurch gekennzeichnet,** daß die organischen Reste in (A) Methyl sind.

3. Zusammensetzung nach Anspruch 1, **dadurch gekennzeichnet,** daß R' Methyl oder Ethyl ist.

4. Zusammensetzung nach Anspruch 2, **dadurch gekennzeichnet,** daß (B) Methyltrimethoxysilan ist.

5. Zusammensetzung nach Anspruch 4, **dadurch gekennzeichnet,** daß die Viskosität von (A) bei 25° C zwischen 40 und 60 Pa.s beträgt.

6. Zusammensetzung nach Anspruch 2, **dadurch gekennzeichnet,** daß (B) 4-8 Gewichtsteile Methyltrimethoxysilan ist.

7. Zusammensetzung nach Anspruch 2, **dadurch gekennzeichnet,** daß (D) von 10-200 Gewichtsteile ist.

8. Zusammensetzung nach Anspruch 2, **dadurch gekennzeichnet,** daß (E) von 0,1-0,5 Gewichtsteile ist.

9. Zusammensetzung nach Anspruch 2, **dadurch gekennzeichnet,** daß (F) von 0,15-0,5 Gewichtsteile ist.

10. Zusammensetzung nach Anspruch 1, **dadurch gekennzeichnet,** daß die Viskosität von (A) bei 25° C von 40-60 Pa.s beträgt, (B) von 4-8 Gewichtsteile ist, (D) von 10-200 Gewichtsteile ist und (F) von 0,15-0,5 Gewichtsteile ist.

11. Verfahren zum Herstellen eines Einkomponenten-Silicon-Dichtungsmittels, das bei Aussetzen von Feuchtigkeit härtbar ist, bestehend aus Mischen in Abwesenheit von Feuchtigkeit einer Zusammensetzung nach Anspruch 1, Lagern in Abwesenheit von Feuchtigkeit, um ein Dichtmaterial zu erhalten, das bei Aussetzen von Feuchtigkeit härtet.

12. Verfahren nach Anspruch 11, **dadurch gekennzeichnet,** daß (A) eine Viskosität bei 25° C von 40-60 Pa.s aufweist, (B) von 4-8 Gewichtsteile ist, (D) von 10-200 Gewichtsteile ist und (F) von 0,15-0,5 Gewichtsteile ist.